# EUROPÄISCHE PATENTSCHRIFT

(11) **EP 1 150 782 B1**
(45) Veröffentlichungstag und Bekanntmachung des Hinweises auf die Patenterteilung: **19.03.2003**
(21) Anmeldenummer: 99964546.8
(22) Anmeldetag: 10.12.1999
(51) Int. Cl.: B05D 7/00, C09D 183/06

(54) **PULVERLACKIERTE SUBSTRATE MIT EINEM DECKLACK AUF BASIS EPOXIDGRUPPENHALTIGER SILANE**
POWDER-COATED SUBSTRATES WITH TOP COAT BASED ON SILANES CONTAINING EPOXIDE GROUPS
SUBSTRATS LAQUES PAR POUDRAGE, POURVUS D'UNE COUCHE DE FINITION A BASE DE SILANE CONTENANT DES GROUPE EPOXYDE

(30) Priorität: 11.12.1998 DE 19857316
(43) Veröffentlichungstag der Anmeldung: 07.11.2001
(73) Patentinhaber: INSTITUT FÜR NEUE MATERIALIEN GEM. GMBH, 66123 Saarbrücken (DE)
(72) Erfinder: DITTFURTH, Carola, D-66123 Saarbrücken (DE); SEPEUR, Stefan, D-66787 Wadgassen-Schaffhausen (DE); WINKLER, Ralf-Peter, D-66113 Saarbrücken (DE); SCHMIDT, Helmut, D-66130 Saarbrücken-Güdingen (DE)
(74) Vertreter: Barz, Peter
(86) Internationale Anmeldenummer: EP9909789
(87) Internationale Veröffentlichungsnummer: WO00035599

(56) Entgegenhaltungen:
- DE-A- 4 338 361
- DE-A- 19 737 475
- US-A- 5 252 399
- PATENT ABSTRACTS OF JAPAN vol. 018, no. 262 (C-1201), 19. Mai 1994 (1994-05-19) & JP 06 039349 A (KANSAI PAINT CO LTD), 15. Februar 1994 (1994-02-15) in der Anmeldung erwähnt

## Beschreibung

Die vorliegende Erfindung betrifft pulverlackierte Substrate mit einer kratz- und abriebbeständigen Deckschicht aus einem Lack, welcher Kondensate auf Basis von hydrolysierbaren Silanen mit mindestens einer Epoxidgruppe umfaßt, und Verfahren zur Herstellung der pulverlackierten Substrate.

Aus dem Stand der Technik sind die Vorteile von Pulverlacken zur Beschichtung von Oberflächen bekannt, wie z. B. sehr gute Haftung auf Metalloberflächen, Korrosionsschutz für Metalloberflächen und einfache Verarbeitbarkeit. Ein hohes Interesse besteht jedoch an Verbesserungen hinsichtlich der Schichtmorphologie (Erhöhung der Glätte und Gleichmäßigkeit, Senkung der Schichtdicke) und an der Erhöhung der Oberflächenhärte und Abriebbeständigkeit. Im Bereich der Acrylat-Pulverlacke sind mehrere Verfahren bekannt, um die pulverlackierte Oberfläche mit einem naßchemisch aufgebrachten Überzug auf Basis organisch-anorganischer Copolymere zu versehen.

JP-A-04318088 beschreibt ein Methacryloxypropyltrimethoxysilan-Styrol-Copolymer zur Beschichtung von mit einem Acrylat-Pulverlack beschichteten Oberflächen. Die transparenten, 20-30 µm dicken Überzüge sollen eine gute Säure- und Kratzbeständigkeit aufweisen.

JP-A-06039349 beschreibt ein Beschichtungsmaterial auf der Basis von Polymerisationsprodukten von hydrolysierbaren Silanen mit Methacryloyloxypropyl-Substituent, weiteren hydrolysierbaren Silanen, Acrylat, Methacrylat und Epoxymethacrylat sowie dem Härtungskatalysator Aluminium-tris(acetylacetonat).

Es ist bekannt, daß im wesentlichen anorganische Überzüge, das heißt Überzüge auf Basis anorganischer Komponenten, häufig gute Oberflächenhärte und Abriebbeständigkeit aufweisen. Aufgrund ihrer hohen Härte sind anorganische Überzüge aber spröder als im wesentlichen organische Überzüge, das heißt Überzüge auf Basis organischer Komponenten, so daß es zu Rißbildungen kommen kann. Insbesondere sind anorganische Überzüge spröder als organische Pulverfack-Überzüge, so daß es bei der thermischen Härtung bei Temperaturen nahe der Vernetzungstemperatur des Pulverlacks und bei Temperaturwechselbelastungen des Beschichtungsverbunds zur Rißbildung kommen kann.

Der vorliegenden Erfindung liegt daher die Aufgabe zugrunde, auf pulverlackierten Oberflächen eine dünne, abriebbeständige Schicht aufzutragen, ohne daß Rißbildung und Sprödigkeit bei Temperaturbelastung auftreten.

Diese Aufgabe wird durch die erfindungsgemäßen pulverlackierten Substrate gelöst, die auf einer mit einem Pulverlack beschichteten Oberfläche eine kratz - und abriebbeständige Deckschicht aus einem Lack aufweisen, welcher umfaßt:
a) Kondensate auf Basis von hydrolysierbaren Silanen mit mindestens einem nicht hydrolysierbaren Substituenten, wobei die hydrolysierbaren Silane an mindestens einem nicht hydrolysierbaren Substituenten eine Epoxidgruppe aufweisen;
b) einen Härtungskatalysator, der ausgewählt ist aus Lewis-Basen und Alkoholaten von Titan, Zirkonium oder Aluminium;
c) nanoskalige anorganische Feststoff-Teilchen mit einer Teilchengröße im Bereich von 1 bis 100 nm; und
d) mindestens ein organisches Monomer, Oligomer oder Polymer mit mindestens einer Epoxidgruppe.

Weiter stellt die Erfindung ein Verfahren zur Herstellung eines beschichteten Substrats bereit, bei dem man auf ein gegebenfalls vorbeschichtetes Substrat einen Pulverlack aufbringt und härtet, und darauf einen Decklack aufträgt und härtet, welcher die vorstehend genannten Komponenten a) bis d) umfaßt.

Erfindungsgemäß werden überraschenderweise dünne, hochabriebbeständige Beschichtungen erhalten, die besonders gut auf pulverlackierten Oberflächen haften, in ihrer Flexibilität dem Pulverlack sehr gut angepaßt sind und dadurch eine deutlich verbesserte Temperaturwechselbeständigkeit (keine Rißbildung bei Herstellung und Anwendung) aufweisen und außerdem eine sehr gute Kratzfestigkeit bzw. Oberflächenhärte und Abriebbeständigkeit zeigen.

Gegenüber dem Stand der Technik ist das erfindungsgemäße Verfahren einfacher durchzuführen, da es keine aufwendige Herstellung von Copolymeren bzw. Polymerisationsprodukten hydrolysierter Silane mit organischen Monomeren oder Oligomeren vor dem Lackauftrag erfordert, so daß wesentlich dünnere Schichten gebildet können, welche die vorstehend genannten Vorteile aufweisen.

Bei den hydrolysierbaren Silanen mit mindestens einem nicht hydrolysierbaren Substituenten, wobei die hydrolysierbaren Silane an mindestens einem nicht hydrolysierbaren Substituenten eine Epoxidgruppe aufweisen, handelt es sich um eine oder mehrere Siliciumverbindungen, die über 1 bis 3, bevorzugt 2 oder 3, besonders bevorzugt 3, hydrolysierbare Reste und 1, 2 oder 3, vorzugsweise einen, nicht hydrolysierbaren Rest verfügt. Mindestens einer der nicht hydrolysierbaren Reste verfügt über mindestens einen Epoxidring.

Beispielsweise handelt es sich bei den Silanen der Komponente a) um Verbindungen der allgemeinen Formel (I):

RₙSiX₄₋ₙ (I)

worin n = 1, 2 oder 3, bevorzugt 1 oder 2, besonders bevorzugt 1 ist, X gleich oder verschieden sein kann und ein Halogen (F, Cl, Br und I, insbesondere Cl und Br), Alkoxy (insbesondere C₁₋₄-Alkoxy, wie z.B. Methoxy, Ethoxy, n-Propoxy, i-Propoxy und Butoxy), Aryloxy (insbesondere C₆₋₁₀-Aryloxy, z.B. Phenoxy), Acyloxy (insbesondere C₁₋₄-Acyloxy, wie z.B. Acetoxy und Propionyloxy) und Alkylcarbonyl (z.B. Acetyl) ist, und R gleich oder verschieden sein und ein nicht hydrolysierbarer Rest ist, wobei mindestens ein Rest R eine Epoxidgruppe aufweist.

Besonders bevorzugte hydrolysierbare Reste X sind Alkoxygruppen, insbesondere Methoxy und Ethoxy. Beispiele für nicht-hydrolysierbare Reste R ohne Epoxidring sind Alkyl, insbesondere C₁₋₄-Alkyl (wie z.B. Methyl, Ethyl, Propyl und Butyl), Alkenyl (insbesondere C₂₋₄-Alkenyl, wie z.B. Vinyl, 1-Propenyl, 2-Propenyl und Butenyl), Alkinyl (insbesondere C₂₋₄-Alkinyl, wie z.B. Acetylenyl und Propargyl) und Aryl (insbesondere C₆₋₁₀-Aryl, wie z.B. Phenyl und Naphthyl), wobei die soeben genannten Gruppen gegebenenfalls einen oder mehrere Substituenten, wie z.B. Halogen und Alkoxy, aufweisen können. Auch Methacryl- und Methacryloxypropylreste verdienen in diesem Zusammenhang als Reste R Erwähnung.

Beispiele für nicht hydrolysierbare Reste R mit Epoxidring sind insbesondere solche, die über eine Glycidyl- bzw. Glycidyloxygruppe verfügen. Diese können über eine Alkylengruppe, z. B. ein C₁-C₆-Alkylen, wie Methylen, Ethylen, Propylen, Butylen, mit dem Siliciumatom verknüpft sein. Konkrete Beispiele für erfindungsgemäß einsetzbare hydrolysierbare Silane können z.B. der EP-A-195493 entnommen werden.

Erfindungsgemäß besonders bevorzugte hydrolysierbare Silane sind diejenigen der allgemeinen Formel (II):

X₃SiR (II)

in welcher die Reste X, gleich oder verschieden voneinander (vorzugsweise identisch), für eine hydrolysierbare Gruppe, beispielsweise eine der vorstehend für die Formel (I) beschriebenen Reste X, vorzugsweise C₁₋₄-Alkoxy und besonders bevorzugt Methoxy und Ethoxy, stehen und R einen Glycidyloxy-(C₁₋₆)-alkylen-Rest darstellt. Wegen der leichten Zugänglichkeit wird γ-Glycidyloxypropyltrimethoxysilan (im folgenden als GPTS abgekürzt) erfindungsgemäß besonders bevorzugt eingesetzt.

Neben den hydrolysierbaren Silanen mit mindestens einer Epoxidgruppe können auch andere hydrolysierbare Verbindungen für den Aufbau der anorganischen Matrix eingesetzt werden. Unter anderen hydrolysierbaren Verbindungen werden dabei im folgenden solche verstanden, bei denen es sich nicht um hydrolysierbares Silan mit mindestens einer Epoxidgruppe handelt. Diese anderen Verbindungen enthalten ebenfalls ein anorganisches Element mit daran gebundenen hydrolysierbaren Substituenten.

Es können eine oder mehrere andere hydrolysierbare Verbindungen zusammen mit dem oder den hydrolysierbaren Silanen mit mindestens einer Epoxidgruppe in der Komponente a) eingesetzt werden, wobei die Menge der anderen hydrolysierbaren Verbindungen 80 Mol-%, und insbesondere 60 Mol-% bezogen auf die insgesamt eingesetzten hydrolysierbaren Verbindungen, bevorzugt nicht übersteigt. Bevorzugt sind mindestens 10 und besonders bevorzugt mindestens 20 Mol-% aller eingesetzten hydrolysierbaren Verbindungen die anderen hydrolysierbaren Verbindungen, die von der bzw. den hydrolysierbaren Silanen mit mindestens einer Epoxidgruppe an einem nicht hydrolysierbaren Substituenten verschieden sind.

Als andere hydrolysierbare Verbindungen kommen beispielsweise hydrolysierbare Verbindungen von Elementen in Frage, die aus der dritten und vierten Hauptgruppe (insbesondere B, Al, Ga, Si, Ge und Sn) und der dritten bis fünften Nebengruppe des Periodensystems (insbesondere Ti, Zr, Hf, V, Nb und Ta) ausgewählt sind. Es können jedoch auch andere Metallverbindungen zu vorteilhaften Ergebnissen führen, wie beispielsweise solche von Zn, Mo und W. Besonders bevorzugt handelt es sich um hydrolysierbare Verbindungen von Elementen aus der Gruppe Si, Ti, Zr, Al, B, Sn und V, die mit der bzw. den hydrolysierbaren Silanen gemäß Komponente a) hydrolysiert werden.

Alle diese Verbindungen enthalten hydrolysierbare Gruppen. Als Beispiele kann auf die in Formel (I) aufgeführten Beispiele für X verwiesen werden. Die Verbindungen können auch neben den hydrolysierbaren Gruppen nicht hydrolysierbare Gruppen aufweisen. Dies ist aber außer für Si nicht bevorzugt. Als Beispiele kann auf die in Formel (I) aufgeführten Beispiele für R verwiesen werden mit der Maßgabe, daß R keine Epoxy-haltige Gruppe ist Für die einsetzbaren Silane kann mit der vorstehend genannten Maßgabe zum Beispiel auf die allgemeine Formel (I) verwiesen werden, wobei n auch 0 sein kann. Konkrete Beispiele für diese anderen hydrolysierbaren Verbindungen sind:
Si(OCH₃)₄, Si(OC₂H₅)₄, Si(O-n- oder i-C₃H₇)₄, Si(OC₄H₉)₄, SiCl₄, HSiCl₃, Si(OOCC₃H)₄, CH₃-SiCl₃, CH₃-Si(OC₂H₅)₃, C₂H₅-SiCl₃, C₂H₅-Si(OC₂H₅)₃, C₃H₇-Si(OCH₃)₃, C₆H₅-Si(OCH₃)₃, C₆H₅-Si(O C₂H₅)₃, (CH₃O)₃-Si-C₃H₆-Cl, (CH₃)₂SiCl₂, (CH₃)₂Si(OCH₃)₂, (CH₃)₂Si(OC₂H₅)₂, (CH₃)₂Si(OH)₂, (C₆H₅)₂SiCl₂, (C₆H₅)₂Si(OCH₃)₂, (C₆H₅)₂Si(OC₂H₅)₂, (i-C₃H₇)₃SiOH, CH₂=CH-Si(OOCCH₃)₃ CH₂=CH-SiCl₃, CH₂=CH-Si(OCH₃)₃, CH₂=CH-Si(OC₂H₅)₃, CH₂=CH-Si(OC₂H₄OCH₃)₃, CH₂=CH-CH₂-Si(OCH₃)₃, CH₂=CH-CH₂-Si(OC₂H₅)₃, CH₂=CH-CH₂-Si(OOCH₃)₃, CH₂=C(CH₃)-COO-C₃H₇-Si(OCH₃)₃, CH₂=C(CH₃)-COO-C₃H₇-Si(OC₂H₅)₃, Al(OCH₃)₃, Al(OC₂H₅)₃, Al(O-n-C₃H₇)₃,Al(O-i-C₃H₇)₃, Al(OC₄H₉)₃, Al(O-i-C₄H₉)₃, Al(O-sek-C₄H₉)₃, AlCl₃, AlCl(OH)₂, Al(OC₂H₄OC₄H₉)₃, TiCl₄, Ti(OC₂H₅)₄, Ti(OC₃H₇)₄, Ti(O-i-C₃H₇)₄, Ti(OC₄H₉)₄, Ti(2-ethylhexoxy)₄; ZrCl₄, Zr(OC₂H₅)₄, Zr(OC₃H₇)₄, Zr(O-i-C₃H₇)₄, Zr(OC₄H₉)₄,
ZrOCl₂, Zr(2-ethylhexoxy)₄, sowie Zr-Verbindungen, die komplexierende Reste aufweisen, wie z.B. β-Diketon und Methacryl-Reste,
BCl₃, B(OCH₃)₃, B(OC₂H₅)₃, SnCl₄, Sn(OCH₃)₄,Sn(OC₂H₅)₄, VOCl₃ und VO(OCH₃)₃.

Wie ersichtlich, können diese Verbindungen (insbesondere die Siliciumverbindungen) auch über nicht hydrolysierbare Reste verfügen, die eine Kohlenstoff-Kohlenstoff-Doppel- oder -Dreifach-Bindung aufweisen. Werden derartige Verbindungen zusammen mit der Siliciumverbindung der Komponente a) eingesetzt, können in die Zusammensetzung zusätzlich auch (vorzugsweise Hydroxylgruppen-haltige) ungesättigte Monomere, wie z.B. (Meth)acrylate, einverleibt werden. Bei der thermischen oder photochemisch induzierten Härtung der entsprechenden Zusammensetzungen findet dann zusätzlich zum Aufbau der organisch modifizierten anorganischen Matrix eine Polymerisation der Spezies mit ungesättigten Bindungen statt, wodurch die Vemetzungsdichte und somit auch die Härte der entsprechenden Überzüge zunimmt.

Außerdem können zusätzlich oder allein als andere hydrolysierbare Verbindungen beispielsweise ein oder mehrere hydrolysierbare Siliciumverbindungen mit mindestens einem nicht hydrolysierbaren Rest eingesetzt werden, der 5 bis 30 Fluoratome an Kohlenstoffatome gebunden aufweist, die gegebenenfalls durch mindestens zwei Atome von Si getrennt sind, einverleibt werden. Als hydrolysierbare Gruppen können dabei z. B. solche eingesetzt werden, wie sie in Formel (I) für X angegeben sind. Die Verwendung eines derartigen fluorierten Silans führt dazu, daß dem entsprechenden Überzug zusätzlich hydrophobe und oleophobe (schmutzabweisende) Eigenschaften verliehen werden.

Die in dem Deckschichtlack zusätzlich einsetzbaren hydrolysierbaren fluorierten Silane sind solche, die über mindestens einen nicht-hydrolysierbaren Rest verfügen, der 5 bis 30 Fluoratome an Kohienstoffatome gebunden aufweist, die gegebenenfalls durch mindestens zwei Atome von Si getrennt sind. Derartige Silane werden in der DE 41 18 184 detailliert beschrieben. Konkrete Beispiele hierfür sind die folgenden:

C₂F₅CH₂-CH₂-SiY₃

n-C₆F₁₃CH₂CH₂-SiY₃

n-C₈F₁₇CH₂CH₂-SiY₃

n-C₁₀F₂₁CH₂CH₂-SiY₃

(Y = OCH₃, OC₂H₅ oder Cl)

i-C₃F₇O-(CH₂)₃-SiCl₂(CH₃)

n-C₆F₁₃CH₂CH₂SiCl₂(CH₃)

n-C₆F₁₃CH₂CH₂SiCl(CH₃)₂

Diese fluorierten Silane werden im allgemeinen in einer Menge von 0,1 bis 15, vorzugsweise 0,2 bis 10 und besonders bevorzugt 0,5 bis 5 Gew.-%, bezogen auf die Masse aller hydrolysierbaren Verbindungen (Komponente a) und die anderen hydrolysierbaren Verbindungen) und der Komponenten b) bis d), eingesetzt.

Die hydrolysierbaren Silane gemäß Komponente a) sowie gegebenenfalls die anderen hydrolysierbaren Verbindungen werden zusammen z. B. in einer Menge von 40 bis 90 Gew.-% bezogen auf die Masse aller hydrolysierbaren Verbindungen und der Komponenten b) bis d) eingesetzt.

Der Lack für die Deckschicht umfaßt ferner einen Härtungskatalysator, der ausgewählt ist aus Lewis-Basen und Alkoholaten von Titan, Zirkonium oder Aluminium. Dieser Härtungskatalysator wirkt insbesondere als Katalysator für die Epoxid-Epoxid- bzw. Polyol-Epoxid-Vernetzung. Der Härtungskatalysator wird in den entsprechenden Zusammensetzungen im allgemeinen in einer Menge von 0,01 bis 0,6 Mol pro Mol Epoxidgruppe der hydrolysierbaren Silane gemäß Komponente a) eingesetzt. Bevorzugt sind Mengen im Bereich von 0,02 bis 0,4 und insbesondere 0,05 bis 0,3 Mol Härtungskatalysator pro Mol Epoxidgruppe.

Als Härtungskatalysator kann z. B. eine Lewis-Base eingesetzt werden. Bei der Lewis-Base handelt es sich vorzugsweise um eine Stickstoffverbindung. Derartige Stickstoffverbindungen können z.B. ausgewählt werden aus N-Heterocyclen, Aminogruppen-haltigen Phenolen, polycyclischen Aminen und Ammoniak (vorzugsweise als wäßrige Lösung). Konkrete Beispiele hierfür sind 1-Methylimidazol, 2-(N,N-Dimethylaminomethyl)phenol, 2,4,6-Tris(N,N-dimethylaminomethyl)phenol und 1,8-Diazabicyclo[5.4.0]-7-undecen. Besonders bevorzugt unter diesen Verbindungen ist 1-Methylimidazol.

Eine weitere Klasse von stickstoffhaltigen Lewis-Basen, die erfindungsgemäß eingesetzt werden können, sind hydrolysierbare Silane, die über mindestens einen nicht hydrolysierbaren Rest verfügen, der mindestens eine primäre, sekundäre oder tertiäre Aminogruppe umfaßt. Derartige Silane können zusammen mit der oder den hydrolysierbaren Silanen gemäß Komponente a) hydrolysiert werden und stellen dann eine in das organisch modifizierte anorganische Netzwerk eingebaute Lewis-Base dar. Bevorzugte Stickstoff-haltige Siliciumverbindungen sind solche der allgemeinen Formel (III):

X₃SiR" (III)

worin die Reste X wie im Falle der allgemeinen Formel (I) oben definiert sind, und R" für einen nicht hydrolysierbaren, an Si gebundenen Rest steht, der mindestens eine primäre, sekundäre oder tertiäre Aminogruppe umfaßt. Konkrete Beispiele für derartige Silane sind 3-Aminopropyltrimethoxysilan, 3-Aminopropyltriethoxysilan, N-(2-Aminoethyl)-3-aminopropyltrimethoxyysilan, N-[N'-(2'-Aminoethyl)-2-aminoethyl]-3-amino-propyltrimethoxysilan und N-[3-(Triethoxysilyl)propyl]-4,5-dihydroimidazol.

Anstelle oder zusätzlich zu der Lewis-Base kann als Härtungskatalysator ein Alkoholat von Ti, Zr oder Al eingesetzt werden. Vorzugsweise handelt es sich um ein solches der allgemeinen Formel (IV)

M(OR''')ₘ (IV)

worin M für Ti, Zr oder Al steht, R'" eine Alkylgruppe mit vorzugsweise 1 bis 4 Kohlenstoffatomen (Methyl, Ethyl, n-Propyl, Isopropyl, n-Butyl, sek.-Butyl oder tert.-Butyl) oder eine Alkylenoxyalkylgruppe mit vorzugsweise 1 bis 4 Kohlenstoffatomen sowohl für die Alkylen- als auch die Alkyleinheit (z. B. Methylen, Ethylen, 1,2-Propylen, 1,3-Propylen und 1,4-Butylen für die Alkyleneinheit und die vorstehend für die Alkylgruppe genannten Beispiele für die Alkyleinheit) darstellt und n 4 (M = Ti, Zr) oder 3 (M = Al) ist. Bevorzugte Härtungskatalysatoren sind Al(OCH₂CH₂OC₄H₉)₃ (Aluminiumtributoxyethanolat), wobei die Butylgruppe vorzugsweise eine n-Butylgruppe ist, Aluminium-sek.butylat und Mischungen von Aluminiumtributoxyethanolat und Aluminium-sek.butylat.

Der Härtungskatalysator wird z. B. in einer Menge von 2 bis 15 Gew.-% bezogen auf die Masse aller hydrolysierbaren Verbindungen und der Komponenten b) bis d) eingesetzt.

Die nanoskaligen anorganischen Feststoff-Teilchen können aus beliebigen anorganischen Materialien bestehen, insbesondere bestehen sie jedoch aus Metallen oder Metallverbindungen wie beispielsweise (gegebenenfalls hydratisierten) Oxiden wie ZnO, CdO, SiO₂, TiO₂, ZrO₂, CeO₂, SnO₂, Al₂O₃, In₂O₃, La₂O₃, Fe₂O₃, Cu₂O, Ta₂O₅, Nb₂O₅, V₂O₅, MoO₃ oder WO₃; Chalkogeniden wie beispielsweise Sulfiden (z.B. CdS, ZnS, PbS und Ag₂S), Seleniden (z.B. GaSe, CdSe und ZnSe) und Telluriden (z.B. ZnTe oder CdTe), Halogeniden wie AgCl, AgBr, Agl, CuCl, CuBr, CdI₂ und PbI₂; Carbiden wie CdC₂ oder SiC; Arseniden wie AlAs, GaAs und GeAs; Antimoniden wie InSb; Nitriden wie BN, AIN, Si₃N₄ und Ti₃N₄; Phosphiden wie GaP, InP, Zn₃P₂ und Cd₃P₂; Phosphaten, Silikaten, Zirkonaten, Aluminaten, Stannaten und den entsprechenden Mischoxiden (z.B. solchen mit Perowskitstruktur wie BaTiO₃ und PbTiO₃). Es kann eine Art von nanoskaligen anorganischen Feststoff Teilchen oder eine Mischung verschiedener nanoskaliger anorganischer Feststoff-Teilchen eingesetzt werden.

Bei den nanoskaligen anorganischen Feststoff-Teilchen handelt es sich bevorzugt um ein Oxid, Oxidhydrat, Nitrid oder Carbid von Si, Al, B, Zn, Cd, Ti, Zr, Ce, Sn, In, La, Fe, Cu, Ta, Nb, V, Mo oder W, besonders bevorzugt von Si, Al, B, Ti und Zr. Bevorzugte teilchenförmige Materialien sind Böhmit, ZrO₂ und TiO₂ sowie Titannitrid. Besonders bevorzugt werden nanoskalige Böhmitteilchen.

Die nanoskaligen anorganischen Feststoff-Teilchen sind in Form von Pulvern im Handel erhältlich und die Herstellung von (sauer stabilisierten) Solen daraus ist ebenfalls im Stand der Technik bekannt. Außerdem kann hierzu auf die unten angegebenen Herstellungsbeispiele verwiesen werden. Das Prinzip der Stabilisierung von nanoskaligem Titannitrid mittels Guanidinpropionsäure ist z.B. in der DE 43 34 639 beschrieben.

Die Variation der nanoskaligen Teilchen geht in der Regel mit einer Variation des Brechwerts der entsprechenden Materialien einher. So führt z.B. der Ersatz von Böhmit-Teilchen durch ZrO₂- bzw. TiO₂-Teilchen zu Materialien mit höheren Brechwerten, wobei sich der Brechwert nach der Lorentz-Lorenz-Gleichung additiv aus dem Volumen der hochbrechenden Komponente und der Matrix ergibt.

Die nanoskaligen anorganischen Feststoff-Teilchen besitzen im allgemeinen eine Teilchengröße im Bereich von 1 bis 100 nm, vorzugsweise 2 bis 50 nm und besonders bevorzugt 5 bis 20 nm. Dieses Material kann in Form eines Pulvers eingesetzt werden, wird jedoch vorzugsweise in Form eines (insbesondere sauer stabilisierten) Sols verwendet.

Die nanoskaligen anorganischen Feststoff-Teilchen können, insbesondere wenn auf sehr gute hochkratzfeste Eigenschaften Wert gelegt wird, in einer Menge von bis zu 50 Gew.-%, bezogen auf die Masse aller hydrolysierbaren Verbindungen und der Komponenten b) bis d), eingesetzt werden. Im allgemeinen liegt der Gehalt an nanoskaligen anorganischen Feststoff-Teilchen im Bereich von 1 bis 40, vorzugsweise 1 bis 30, besonders bevorzugt 1 bis 15 Gew.-%, bezogen auf die Masse aller hydrolysierbaren Verbindungen und der Komponenten b) bis d).

Es können auch nanoskalige anorganische Feststoff-Teilchen eingesetzt werden, die mit polymerisierbaren undloder polykondensierbaren organischen Oberflächengruppen versehen sind. Solche polymerisierbaren und/oder polykondensierbaren Nanopartikel und ihre Herstellung sind z.B. in der DE 19746885 beschrieben. Es können auch nanoskalige anorganische Feststoff-Teilchen eingesetzt werden, die aufgrund von Lewis-Basen- oder Lewis-Säure-Gruppen auf der Teilchenoberfläche auch als Hydrolyse- und Härtungskatalysator wirken. Derart modifizierte nanoskalige Feststoff-Teilchen sind in der PCT/EP98/03846 beschrieben.

Als weitere Komponente enthält der erfindungsgemäß verwendete Deckschichtlack mindestens ein organisches Monomer, Oligomer oder Polymer mit mindestens einer Epoxidgruppe oder Mischungen davon. Bei diesen organischen Monomeren, Oligomeren oder Polymeren mit Epoxidgruppen handelt es sich z. B. um an sich bekannte Verbindungen, die nach dem Stand der Technik als Epoxidharze, Gießharze und als Epoxyreaktiwerdünner eingesetzt werden. Es kann sich dabei um z. B. um aliphatische, cycloaliphatische oder aromatische Verbindungen, um aliphatische, cycloaliphatische oder aromatische Ester oder Ether oder Mischungen davon , z. B. auf Basis von Ethylenglycol, 1,4-Butandiol, Propylenglycol, 1,6-Hexandiol, Cyclohexandimethanol, Pentaerythrit, Bisphenol A, Bisphenol F oder Glycerin, jeweils als Monomere, Oligomere oder Polymere, handeln, die mindestens eine Epoxidgruppe aufweisen. Sie können auch mehr Epoxidgruppen, im Fall von Monomeren oder Oligomeren z. B. 2 oder 3, aufweisen.

Konkrete Beispiele sind 3,4-Epoxycyclohexylmethyl-3,4-epoxycyclohexancarboxylat, Bis-(3,4-epoxycyclohexyl)adipat, 1,4-Butandiolglycidether, Phenylglycidether, o-Kresylglycidether, p-tert.-Butyl-Phenylglycidether, Cyclohexandimethanoldiglycidether, Glycerintriglycidether, Neopentylglykoldiglycidether, Pentaerythritpolyglycidether, 2-Ethyl-Hexylglycidether, 1,6-Hexandioldiglycidether, Polypropylenglykoldi-glycidether, Epoxidharze auf der Basis von Bisphenol-A, Epoxidharze auf der Basis von Bisphenol-F, Epoxidharze auf der Basis vom Bisphenol-A/F.

Die eingesetzbaren Epoxidharze weisen bevorzugt ein Epoxidäquivalentgewicht von 130 bis 455 g/Äquivalent auf und sind vorzugsweise flüssig mit einer Viskosität von 1,2 bis 12.000 mPas bei 25°C.

Als organisches Monomer, Oligomer oder Polymer mit mindestens einer Epoxidgruppe können z. B. frei erhältliche Handelsprodukte, wie die Produkte Ruetapox® (Fa. Bakelite AG), die Produkte Polypox R® (Fa. U. Prümmer Polymer-Chemie GmbH), die Produkte Araldit® GY 257, Araldit® GY 266, Araldit GY 179, Araldit® PY 309, Araldit® DY 3601, Araldit® CIBA, Araldit® GY 285 (Fa. Carl Roth und Fa. Ciba-Geigy) und die Produkte Cyracure® Resin UVR 6128, Cyracure® Resin UVR 6110 (Fa. Union Carbide) verwendet werden.

Das organische Monomer, Oligomer oder Polymer mit mindestens einer Epoxidgruppe wird z. B. in einer Menge von 6 bis 30 Gew.-% bezogen auf die Masse aller hydrolysierbaren Verbindungen und der Komponenten b) bis d) eingesetzt.

Zur Bildung der Kondensate a) werden die hydrolysierbaren Silane mit mindestens einem nicht hydrolysierbaren Substituenten mit mindestens einer Epoxidgruppe, gegebenfalls, falls diese eingesetzt werden, zusammen mit den vorstehend beschriebenen anderen hydrolysierbaren Verbindungen, hydrolysiert. Dabei wird vorzugsweise unter Verwendung eines Katalysators hydrolysiert. Bevorzugt werden Katalysatoren, die nicht gleichzeitig Kondensationskatalysatoren für die Epoxid-Epoxid-Vemetzung sind. Ein bevorzugter saurer Katalysator ist wäßrige HCI. Dabei wird die Hydrolyse vorzugsweise so durchgeführt, daß pro Mol hydrolysierbarem Rest 0,5 bis 4,0 Mol H₂O verwendet wird. Die Hydrolyse wird beispielsweise bei Raumtemperatur durchgeführt.

Bei der Hydrolyse treten auch Kondensationsreaktionen zwischen den hydrolysierbaren Verbindungen auf, wobei Kondensate entstehen. Der Kondensationsgrad hängt von den Reaktionsparametem ab, so daß der Fachmann durch Einstellung dieser Parameter den Kondensationsgrad nach Bedarf einstellen kann. Im allgemeinen wird so gearbeitet, daß vor Zugabe der restlichen Komponenten b) bis c) zwar schon teilweise Kondensation stattgefunden hat, es aber noch nicht zur vollständigen Kondensation gekommen ist, so daß man auch von Vorkondensaten sprechen kann. Die nanoskaligen anorganischen Feststoff-Teilchen (Komponente c)) können aber auch schon vor der Hydrolyse zu den hydrolysierbaren Silanen und gegebenfalls der anderen hydrolysierbaren Verbindungen zugegeben werden. Vorzugsweise werden die nanoskaligen anorganischen Feststoff-Teilchen als Suspension in dem bevorzugten Katalysator, wäßrige HCI, zugegeben.

Nach der Hydrolyse und teilweisen Kondensation schließt sich dann die Zugabe der anderen Komponenten in beliebiger Reihenfolge an. Wie gesagt, kann die Hydrolyse aber z.B. auch in Gegenwart der nanoskaligen anorganischen Feststoff-Teilchen erfolgen.

Werden neben den relativ reaktionsträgen Siliciumverbindungen auch reaktionsfähigere andere hydrolysierbare Verbindungen eingesetzt, wie z.B. solche von Ti, Zr und Al, empfiehlt es sich, das Wasser schrittweise und/oder unter Eiskühlung zuzugeben und/oder Verbindungen einzusetzen, die aufgrund von Komplexierung reaktionsträger gemacht wurden (wie z.B. im Falle von Al(OC₂ H₄OC₄H₉)₃).

Zwecks Einstellung der rheologischen Eigenschaften der Zusammensetzungen können diesen gegebenenfalls inerte Lösungsmittel auf irgendeiner Stufe der Herstellung zugesetzt werden. Vorzugsweise handelt es sich bei diesen Lösungsmitteln um bei Raumtemperatur flüssige Alkohole und/oder Alkoholether, z. B. C₁-C₈-Alkohole, die im übrigen auch bei der Hydrolyse der bevorzugt eingesetzten Alkoxide der betreffenden Elemente entstehen, oder Monoether von Diolen wie Ethylenglycol oder Propylenglycol mit C₁-C₈-Alkoholen.

Weiter kann der Lack für die Deckschicht weitere Additive enthalten. Dabei handelt es sich um die üblichen Additive, wie z.B. Färbemittel, Verlaufsmittel, UV-Stabilisatoren, Antioxidantien, wie sterisch gehinderte Amine (HALS), Photoinitiatoren, Photosensibilisatoren (wenn eine photochemische Härtung der Zusammensetzung beabsichtigt ist) und thermische Polymerisationskatalysatoren.

Bei dem zu beschichteten Substrat kann es sich z. B. um ein Substrat aus Metall, Glas, Kunststoff, Holz oder Keramik handeln. Bevorzugt handelt es sich um ein Substrat aus Metall. Das Substrat kann vorbehandelt sein, z. B. durch eine Phosphatierung. Gegebenenfalls ist das Substrat bereits mit üblichen Grundierungen oder Beschichtungen versehen.

Auf das Substrat wird ein Pulverlack aufgebracht. Bei einem Pulverlack handelt es sich um einen in Pulverform aufgetragenen Lack, dessen filmbildende Phase aus Bindemittel, gegebenenfalls Pigmenten, gegebenenfalls Füllstoffen und gegebenenfalls Additiven besteht und der nach dem Einbrennen einen Lackfilm bildet. Bei dem eingesetzten Pulverlack kann es sich um jeden nach dem Stand der Technik bekannten Pulverlack handeln. Für duromere Lackfilme (thermosetting powder coatings) werden Härter und Bindemittel wie z. B. Epoxide, Polyester, Epoxid-Polyester-Gemische, Polyurethane oder Acrylate eingesetzt. Bei thermoplastischen Pulverlacken werden als Bindemittel z. B. Polyolefine oder PVC eingesetzt.

Der Auftrag des Pulverlacks erfolgt nach den üblichen Verfahren. Anschließend wird aus dem Pulver ein Film auf dem Substrat gebildet, der gehärtet wird. Auf der durch den Pulverlack gebildeten gehärteten Lackschicht wird dann der Lack für die Deckschicht aufgetragen.

Der Auftrag des vorstehend beschriebenen Decklacks auf das pulverlackierte Substrat kann durch Standard-Beschichtungsverfahren, wie z.B. Tauchen, Streichen, Bürsten, Rakeln, Walzen, Sprühen und Schleudem, erfolgen.

Gegebenenfalls nach vorheriger Antrocknung bei Raumtemperatur (zur teilweisen Entfernung der Lösungsmittel) wird dann eine Härtung (Kondensation) durchgeführt. Vorzugsweise erfolgt die Härtung thermisch bei Temperaturen im Bereich von 50 bis 300°C, bevorzugt bei 70 bis 200°C, ganz besonders bevorzugt bei 90 bis 180°C, gegebenenfalls unter vermindertem Druck.

Durch die erfindungsgemäß eingesetzten Deckschichtlacke können für die Deckschicht Schichtdicken von z.B. 1 bis 30 µm, bevorzugt 1 bis 20 µm und insbesondere 3 bis 10 µm, erhalten werden.

Die Beschichtungen können, falls gewünscht, hohe Transparenz aufweisen und zeichnen sich daneben auch durch eine hohe Kratzfestigkeit, Langzeit-hydrophiles Verhalten (bedingt durch die sauer katalysierte Hydrolyse) und schmutzabweisende Eigenschaften (bei zusätzlicher Verwendung von fluorierten Silanen) aus.
Werden der Zusammensetzung des Lacks für die Deckschicht bestimmte Tenside zugegeben, erhält man bezüglich der (Langzeit-)Hydrophilie eine Verbesserung. Werden der Zusammensetzung des Lacks für die Deckschicht bestimmte aromatische Polyole zugegeben, erhält man Beschichtungen, die besonders korrosionsinhibierend sind. Hinsichtlich geeigneter Tenside und aromatischer Polyole sei auf die WO 95/13326 verwiesen.

Desweiteren wurde überraschenderweise festgestellt, daß durch den Einsatz der organischen Monomere, Oligomere und/oder Polymere mit mindestens einer Epoxidgruppe keine nachteilige Versprödung, sondern im Gegensatz dazu eine vorteilhafte Flexibilisierung ohne negative Beeinträchtigung der Kratz- und Abriebbeständigkeit oder der Säurebeständigkeit erhalten werden kann. Es entstehen gut haftende Decklackschichten, die in ihrer Flexibilität dem Pulverlack sehr gut angepaßt sind und dadurch eine deutlich verbesserte Temperaturwechselbeständigkeit (keine Rißbildung bei Herstellung und Anwendung) aufweisen. Durch den Decklacküberzug werden Unebenheiten der Pulverlackoberfläche (Orangenhaut) ausgeglichen und die beschichteten Gegenstände erhalten ein ansprechenderes Erscheinungsbild.

Die erfindungsgemäß verwendeten Decklacke eignen sich somit hervorragend zur Beschichtung von pulverlackierten Substraten. Sie eignen sich beispielweise insbesondere zur Beschichtung von pulverlackierten Oberflächen bzw. Gehäusen, insbesondere Metallgehäusen, von Industriegeräten oder pulverlackierten Oberflächen von Einrichtungsgegenständen, Eisenwaren und Fortbewegungsmitteln.

Beispiele für pulverlackierte Oberflächen bzw. Gehäuse, insbesondere Metallgehäuse, von Industriegeräten sind Industrieöfen, Schaltschränke, Computer und Fertigungsanlagen. Beispiele für pulverlackierte Oberflächen von Einrichtungsgegenständen sind Oberflächen von Regalen, Schränken, Stühlen und Tischen. Beispiele für pulverlackierte Oberflächen von Eisenwaren sind Oberflächen von Rahmen von Fenstern und Türen, Armaturen, Beschläge, Geländer und Pfosten. Beispiele für pulverlackierte Oberflächen von Fortbewegungsmitteln sind Oberflächen von Rahmen von Fahrrädern, Mopeds und Motorrädern, Karosserieteile und Felgen von Kraftfahrzeugen.

Die folgenden Beispiele sollen die vorliegende Erfindung weiter erläutern, ohne deren Umfang jedoch zu beschränken.

### Beispiel 1:

### a) Herstellung eines Böhmitsols:

12,82 g Essigsäure-stabilisiertes (6,4 Gew.% Essigsäure) Böhmitpulver wurden mit 104,62 ml 0.1n HCI versetzt. Durch anschließende Ultraschallbehandlung (20 Minuten) entstand eine transparente, farblose Lösung, die direkt zur Herstellung des Beschichtungssols weiterverwendet wurde.

### b) Herstellung des Beschichtungssols

Eine Mischung aus 118,17 g GPTS und 62,50 g Tetraethoxysilan (TEOS) wurde mit 24,3 g des obigen Böhmitsols versetzt Die Reaktionsmischung wurde 2 h bei Raumtemperatur gerührt und anschließend unter Eiskühlung mit 18,93 g Aluminiumtributoxyethanolat versetzt Das resultierende Sol wurde 2 h bei Raumtemperatur gerührt und dann unter Eiskühlung mit 93,14 g des obigen Böhmitsols und 79,30 g Butoxyethanol versetzt Die Topfzeit betrug mehrere Monate bei Lagerung bei 4 °C.

### c) Herstellung der Beschichtung

Das Beschichtungssol wurde durch Spincoating auf mit Pulveriack beschichtete Bleche aufgetragen. Die Viskosität des Materials wurde dabei durch die Zugabe von 1-Butanol an den Verarbeitungsprozeß angepaßt Die Platten wurden 5 min bei 25 °C abgelüftet und 30 min bei 160 °C gehärtet.

### d) Charakterisierung

Erhalten wurde eine rissige, transparente Beschichtung von 6 µm Dicke auf der pulverlackierten Oberfläche. Die weiteren Eigenschaften sind in Tabelle 1 Spalte 3 zusammengefaßt.

### Beispiel 2:

### a) Herstellung des Böhmitsols:

12,82 g Essigsäure-stabilisiertes (6,4 Gew.% Essigsäure) Böhmitpulver wurden mit 104,62 0.1 n HCl versetzt. Durch anschließende Ultraschallbehandlung (20 Minuten) entstand eine transparente, farblose Lösung, die direkt zur Herstellung des Beschichtungssols weiterverwendet wurde.

### b) Herstellung des Beschichtungssols

Eine Mischung aus 118,17 g GPTS und 62,50 g TEOS wurde mit 24,3 g des obigen Böhmitsols versetzt. Die Reaktionsmischung wurde 2 h bei Raumtemperatur gerührt und anschließend unter Eiskühlung mit 18,93 g Aluminiumtributoxyethanolat versetzt. Das resultierende Sol wurde 2 h bei Raumtemperatur gerührt und dann unter Eiskühlung mit 93,14 g des obigen Böhmitsols und 79,30 g Butoxyethanol versetzt. Die Topfzeit betrug mehrere Monate bei Lagerung bei 4 °C.

### c) Herstellung der Beschichtung

In 396,34 g des Beschichtungssols wurden 80,0 g sind 3,4-Epoxycyclohexylmethyl-3,4-epoxycyclohexancarboxylat unter Rühren gelöst. Das Beschichtungssol wurde durch Spincoating auf mit Pulverlack beschichtete Bleche aufgetragen. Die Viskosität des Materials wurde dabei durch die Zugabe von 1-Butanol an den Verarbeitungsprozeß angepaßt. Die Platten wurden 5 min bei 25 °C abgelüftet und 30 min bei 160 °C gehärtet.

### d) Charakterisierung

Erhalten wurde eine rißfreie, transparente Beschichtung von 6 µm Dicke auf der pulverlackierten Oberfläche. Die weiteren Eigenschaften sind in Tabelle 1 Spalte 4 zusammengefaßt.

**Tabelle 1:**

| Eigenschaften unbeschichteter und beschichteter Substrate | | | |
|---|---|---|---|
| **Prüfung** | **Unbeschichtetes Substrat (Pulverlack- Oberfläche)** | **Nach Beispiel 1 beschichtetes Substrat** | **Nach Beispiel 2 beschichtetes Substrat** |
| Aussehen¹nach der Aushärtung | keine Risse | Risse | keine Risse |
| Haftung² | 0/0 | entfällt wg. Risse | 0/0 |
| Temperaturwechsel beständigkeit³ | >12 | entfällt wg. Risse | 5 |
| Abrieb⁴ | 18 | entfällt wg. Risse | 4 |
| Säurestabilität⁵ | keine Schäden | entfällt wg. Risse | keine Schäden |
| Backofenspray⁶ | keine Schäden | entfällt wg. Risse | keine Schäden |

| | | | |
|---|---|---|---|
| ¹Aussehen: Sichtbarkeit von Rissen bei Vergrößerungen 1x bis 40x | | | |
| ²Haftung: Gitterschnitt, Tapetest (0=bester Wert) | | | |
| ³Temperaturwechsel: 1 Zyklus = 10 min 200°C dann 10 min Abkühlen auf RT Zyklenzahl bis zur Sichtbarkeit von Rissen bei Vergrößerungen 1x bis 40x | | | |
| ³Abrieb: Taber Abraser, 1000 Zyklen, 500g Last, CS 10F Räder Masseverlust in mg/1000 Zyklen | | | |
| ⁵Säurestabilität: 30 min Einwirkung von Essigessenz (braun) bei RT und 50°C, Visuelle Bewertung auf Schäden an der Beschichtung | | | |
| ⁶Backofenspray: 30 min Einwirkung von Backofenspray bei RT und 50°C. Visuelle Bewertung auf Schäden an der Beschichtung | | | |

## Patentansprüche

1. Pulverlackierte Substrate, die auf einer mit einem Pulveriack beschichteten Oberfläche eine kratz- und abriebbeständige Deckschicht aus einem Lack aufweisen, welcher umfaßt:
a) Kondensate auf Basis von hydrolysierbaren Silanen mit mindestens einem nicht hydrolysierbaren Substituenten, wobei die hydrolysierbaren Silane an mindestens einem nicht hydrolysierbaren Substituenten eine Epoxidgruppe aufweisen;
b) einen Härtungskatalysator, der ausgewählt ist aus Lewis-Basen und Alkoholaten von Titan, Zirkonium oder Aluminium;
c) nanoskalige anorganische Feststoff-Teilchen mit einer Teilchengröße im Bereich von 1 bis 100 nm; und
d) mindestens ein organisches Monomer, Oligomer oder Polymer mit mindestens einer Epoxidgruppe.

2. Pulverlackierte Substrate nach Anspruch 1, **dadurch gekennzeichnet, daß** die Komponente b) Aluminiumtributoxyethanolat, Aluminium-sek.-butylat oder eine Mischung beider ist.

3. Pulverlackierte Substrate nach Anspruch 1 oder 2, **dadurch gekennzeichnet, daß** das hydrolysierbare Silan mit Epoxidgruppe eine Verbindung der allgemeinen Formel (II) ist:
X₃SiR (II)
in welcher die Reste X, gleich oder verschieden voneinander, für eine hydrolysierbare Gruppe stehen und R einen Glycidyloxy-(C₁-C₆)-alkylen-Rest darstellt.

4. Pulverlackierte Substrate nach Anspruch 3, **dadurch gekennzeichnet, daß** das hydrolysierbare Silan mit Epoxidgruppe Glycidoxypropyltrimethoxysilan und/oder Glycidoxypropyltriethoxysilan ist.

5. Pulverlackierte Substrate nach einem der Ansprüche 1 bis 4, **dadurch gekennzeichnet, daß** die nanoskaligen anorganischen Feststoff-Teilchen Oxide, Oxidhydrate, Nitride und/oder Carbide von Si, Al B, Zn, Cd, Ti, Zr, Ce, Sn, In, La, Fe, Cu, Ta, Nb, V, Mo oder W sind.

6. Pulverlackierte Substrate nach Anspruch 5, **dadurch gekennzeichnet, daß** die eingesetzten nanoskaligen anorganischen Feststoff-Teilchen Böhmit-Teilchen sind.

7. Pulverlackierte Substrate nach irgendeinem der Ansprüche 1 bis 6, **dadurch gekennzeichnet, daß** die hydrolysierbaren Silane mit mindestens einer Epoxidgruppe von Komponente a) zusammen mit einer oder mehreren anderen hydrolysierbaren Verbindungen von Elementen aus der Gruppe Si, Ti, Zr, Al, B, Sn und V hydrolysiert und kondensiert worden sind, wobei die Menge der anderen hydrolysierbaren Verbindungen 80 Mol-%, bezogen auf die insgesamt eingesetzten hydrolysierbaren Verbindungen, nicht übersteigt.

8. Verfahren zur Herstellung eines beschichteten Substrats nach Anspruch 1, **dadurch gekennzeichnet, daß** man auf ein gegebenenfalls vorbeschichtetes Substrat einen Pulverlack aufbringt und härtet, und darauf einen Decklack aufträgt und härtet, welcher umfaßt:
a) Kondensate auf Basis von hydrolysierbaren Silanen mit mindestens einem nicht hydrolysierbaren Substituenten, wobei zumindest ein Teil der hydrolysierbaren Silane an einem nicht hydrolysierbaren Substituenten eine Epoxidgruppe aufweist;
b) einen Härtungskatalysator, der ausgewählt ist aus Lewis-Basen und Alkoholaten von Titan, Zirkonium oder Aluminium;
c) nanoskalige anorganische Feststoff-Teilchen mit einer Teilchengröße im Bereich von 1 bis 100 nm; und
d) mindestens ein organisches Monomer, Oligomer oder Polymer mit mindestens eine Epoxidgruppe.

## Claims

1. Powder-coated substrates having on a powder-coated surface a scratch-resistant and abrasion-resistant topcoat of a coating material which comprises:
a) condensates based on hydrolysable silanes containing at least one non-hydrolysable substituent, the hydrolysable silanes having an epoxide group on at least one non-hydrolysable substituent;
b) a curing catalyst selected from Lewis bases and alkoxides of titanium, zirconium or aluminium;
c) nanoscale inorganic solid particles having a particle size in the range from 1 to 100 nm; and
d) at least one organic monomer, oligomer or polymer containing at least one epoxide group.

2. Powder-coated substrates according to Claim 1, **characterized in that** the component b) is aluminium tributoxyethoxide, aluminium sec-butoxide or a mixture of both.

3. Powder-coated substrates according to Claim 1 or 2, **characterized in that** the hydrolysable silane containing epoxide group is a compound of the general formula (II):
X₃SiR (II)
wherein the radicals X, identical to or different from one another, are a hydrolysable group and R is a glycidyloxy-C₁₋₆ alkylene radical.

4. Powder-coated substrates according to Claim 3, **characterized in that** the hydrolysable silane containing epoxide group is glycidyloxypropyl-trimethoxysilane and/or glycidyloxypropyltriethoxysilane.

5. Powder-coated substrates according to one of Claims 1 to 4, **characterized in that** the nanoscale inorganic solid particles are oxides, oxide hydrates, nitrides and/or carbides of Si, Al, B, Zn, Cd, Ti, Zr, Ce, Sn, In, La, Fe, Cu, Ta, Nb, V, Mo or W.

6. Powder-coated substrates according to Claim 5, **characterized in that** the nanoscale inorganic solid particles used are boehmite particles.

7. Powder-coated substrates according to any one of Claims 1 to 6, **characterized in that** the hydrolysable silanes containing at least one epoxide group of component a) have been hydrolysed and condensed together with one or more other hydrolysable compounds of elements from the group consisting of Si, Ti, Zr, Al, B, Sn and V, the amount of the other hydrolysable compounds not exceeding 80 mol%, based on the total hydrolysable compounds employed.

8. Process for producing a coated substrate according to Claim 1, **characterized in that** a powder coating material is applied to and cured on an optionally precoated substrate, and on the powder coating a topcoat material is applied and cured, the said topcoat material comprising:
a) condensates based on hydrolysable silanes containing at least one non-hydrolysable substituent, at least some of the hydrolysable silanes having an epoxide group on a non-hydrolysable substituent;
b) a curing catalyst selected from Lewis bases and alkoxides of titanium, zirconium or aluminium;
c) nanoscale inorganic solid particles having a particle size in the range from 1 to 100 nm; and
d) at least one organic monomer, oligomer or polymer containing at least one epoxide group.

## Revendications

1. Subjectiles peints par poudrage selon l'invention, qui comportent sur une surface revêtue d'une peinture en poudre une couche de finition résistante à la rayure et à l'abrasion, à base d'une peinture qui comprend :
a) des produits de condensation à base de silanes hydrolysables comportant au moins un substituant non hydrolysable, les silanes hydrolysables comportant un groupe époxy sur au moins un substituant non hydrolysable ;
b) un catalyseur de durcissement, qui est choisi parmi des bases de Lewis et des alcoolates de titane, zirconium ou aluminium ;
c) des nanoparticules de matière solide minérale, ayant une taille de particules dans la plage de 1 à 100 nm ; et
d) au moins un monomère, oligomère ou polymère organique comportant au moins un groupe époxy.

2. Subjectiles peints par poudrage selon la revendication 1, **caractérisés en ce que** le composant b) est le tributoxyéthanolate d'aluminium, le sec-butylate d'aluminium ou un mélange des deux.

3. Subjectiles peints par poudrage selon la revendication 1 ou 2, **caractérisés en ce que** le silane hydrolysable à groupe époxy est un composé de formule générale (II) :
X₃SiR (II)
dans laquelle les radicaux X, identiques ou différents les uns des autres, représentent un groupe hydrolysable, et R représente un radical glycidyloxy-alkylène(C₁₋₆).

4. Subjectiles peints par poudrage selon la revendication 3, **caractérisés en ce que** le silane hydrolysable à groupe époxy est le glycidoxypropyltriméthoxysilane et/ou le glycidoxypropyltriéthoxysilane.

5. Subjectiles peints par poudrage selon l'une quelconque des revendications 1 à 4, **caractérisés en ce que** les nanoparticules de matière solide minérale sont des oxydes, hydrates, nitrures et/ou carbures de Si, Al, B, Zn, Cd, Ti, Zr, Ce, Sn, In, La, Fe, Cu, Ta, Nb, V, Mo ou W.

6. Subjectiles peints par poudrage selon la revendication 5, **caractérisés en ce que** les nanoparticules de matière solide minérale utilisées sont des particules de boehmite.

7. Subjectiles peints par poudrage selon l'une quelconque des revendications 1 à 6, **caractérisés en ce que** les silanes hydrolysables ont été hydrolysés et condensés avec au moins un groupe époxy du composant a), conjointement avec un ou plusieurs autres composés hydrolysables des éléments choisis dans le groupe constitué par Si, Ti, Zr, Al, B, Sn et V, la quantité des autres composés hydrolysables n'excédant pas 80 % en moles, par rapport aux composés hydrolysables utilisés au total.

8. Procédé pour la production d'un subjectile revêtu selon la revendication 1, **caractérisé en ce qu'**on applique et fait durcir une peinture en poudre sur un subjectile éventuellement revêtu au préalable, et on applique et fait durcir sur celle-ci une peinture de finition qui comprend :
a) des produits de condensation à base de silanes hydrolysables comportant au moins un substituant non hydrolysable, au moins une partie des silanes hydrolysables comportant un groupe époxy sur au moins un substituant non hydrolysable ;
b) un catalyseur de durcissement, qui est choisi parmi des bases de Lewis et des alcoolates de titane, zirconium ou aluminium ;
c) des nanoparticules de matière solide minérale, ayant une taille de particules dans la plage de 1 à 100 nm ; et
d) au moins un monomère, oligomère ou polymère organique comportant au moins un groupe époxy.
